# EUROPEAN PATENT APPLICATION

(11) **EP 4 851 924 A1**
(43) Date of publication of application: **09.12.2026**
(21) Application number: 25180866.3
(22) Date of filing: 04.06.2025
(51) Int. Cl.: G06T 7/70, G06T 7/73, G06T 7/80, G06V 10/22, G06V 10/44, G06V 10/74

(54) **METHOD AND SYSTEM FOR CALIBRATING A CAMERA MOUNTED ON A VEHICLE**

(71) Applicant: Volvo Car Corporation, 405 31 Göteborg (SE)
(72) Inventor: WAHLSTRÖM, Eric, 412 58 GÖTEBORG (SE); ZETTERQVIST, Efraim, 412 79 GÖTEBORG (SE); SOMALWAR, Rasika, 431 30 MÖLNDAL (SE); KÄLLMAN, Elin, 418 75 GÖTEBORG (SE); SHANMUGAM, Srinath, 418 70 GÖTEBORG (SE)
(74) Representative: Kransell & Wennborg KB

(57) **Abstract**

A computer implemented method for calibrating a camera (202a-e) mounted on a vehicle (200), the method comprising, by computer system processing circuitry: acquiring (100) image data (300) from the camera (202a-e), wherein the image data includes at least a portion of the vehicle; identifying (102), within the image data, a set of two-dimensional reference image points (302) corresponding to respective structural features of the vehicle; projecting (104) the identified reference image points from two-dimensional image space into three-dimensional space, thereby obtaining a first set of three-dimensional points; obtaining (106) a second set of three-dimensional reference points corresponding to nominal positions of the features in a vehicle-fixed coordinate system; and aligning (108) the first set of three-dimensional points with the second set of three-dimensional reference points to determine a rotational and/or positional deviation of the camera relative to the vehicle-fixed coordinate system.

## Description

### TECHNICAL FIELD

The present disclosure relates to a method and system for calibrating a camera mounted on a vehicle. In particular, the disclosure describes a method and system for calibrating a camera mounted on a vehicle using only features of the vehicle itself.

### BACKGROUND

Contemporary vehicles are commonly equipped with exterior-facing cameras to enable a range of functionalities including driver assistance, environmental perception, and automated navigation. These cameras are typically positioned at fixed locations on the vehicle body, such as the front grille, rear bumper, and side mirrors, and are integrated into systems that rely on accurate image data for operational decision-making.

To ensure consistent system performance, it is important that the positional relationship between each camera and the vehicle's structural frame is known with sufficient precision. Deviations in this spatial relationship, whether due to manufacturing tolerances, component replacement, or mechanical disturbances, can affect the quality of sensor data interpretation and downstream processing.

### SUMMARY

**In** general, the disclosed subject matter relates to a method and system for calibrating a camera mounted on a vehicle

According to a first aspect, there is provided a computer implemented method for calibrating a camera mounted on a vehicle, the method comprising, by computer system processing circuitry: acquiring image data from the camera, wherein the image data includes at least a portion of the vehicle; identifying, within the image data, a set of two-dimensional reference image points corresponding to respective structural features of the vehicle; projecting the identified reference image points from two-dimensional image space into three-dimensional space, thereby obtaining a first set of three-dimensional points; obtaining a second set of three-dimensional reference points corresponding to nominal positions of the features in a vehicle-fixed coordinate system; and aligning the first set of three-dimensional points with the second set of three-dimensional reference points to determine a rotational and/or positional deviation of the camera relative to the vehicle-fixed coordinate system.

In vehicle systems employing externally mounted cameras for functions such as perception and navigation, it is important to accurately determine the orientation and position of each camera relative to the vehicle's structural reference frame. However, maintaining this spatial relationship can be challenging due to variations introduced during manufacturing, component installation, or mechanical disturbances over time. Conventional approaches often rely on dedicated calibration equipment or external reference targets, which may be costly, inflexible, or unsuitable for all deployment environments.

To address this problem, a method is provided for determining a deviation in the spatial orientation and/or position of a camera mounted on a vehicle. The method includes acquiring image data from the camera, the image data comprising at least a portion of the vehicle itself. From this image data, a set of two-dimensional reference image points is identified, each corresponding to a known structural feature of the vehicle. These reference image points are typically associated with features that are predetermined, or predefined, based on a geometric model of the vehicle, such as a Computer-Aided Design (CAD) model. The identified two-dimensional points are then projected into three-dimensional space using intrinsic parameters of the camera and a geometric projection model, resulting in a first set of three-dimensional points. A second set of three-dimensional reference points is obtained from the vehicle model, corresponding to the nominal spatial positions of the same structural features within a vehicle-fixed coordinate system. The first and second sets of points are aligned to determine a transformation that represents the rotational and/or positional deviation of the camera from its intended orientation.

This solution enables a robust, infrastructure-independent method for determining the spatial relationship between a camera and the vehicle without relying on external calibration targets or fixtures. By using visible structural features of the vehicle as internal reference points and applying image-based processing techniques, the method supports automated orientation estimation directly from image data. As a result, it facilitates efficient, repeatable, and scalable camera position verification across diverse operational contexts, including both manufacturing and service environments. This improves system reliability, reduces calibration cost, and enables recalibration without requiring specialized external equipment.

According to an example, the set of two-dimensional reference image points is defined based on a three-dimensional model of the vehicle. Defining reference image points based on a three-dimensional vehicle model enables consistent spatial anchoring of features across multiple vehicle instances. The use of a predefined geometry ensures repeatable point identification and facilitates automated image interpretation, which supports higher accuracy in determining the spatial configuration of the camera.

According to an example, the second set of three-dimensional reference points is obtained from nominal features of the vehicle. Using nominal features as a reference ensures that the calibration process is grounded in predefined design geometry. These nominal features may originate from sources such as CAD models or previously captured nominal images, allowing for standardized comparison across vehicles. Deriving reference points from nominal data enables precise deviation detection in the camera's spatial configuration and eliminates the need for physical calibration targets, thereby simplifying deployment and improving scalability in production and service environments.

According to an example, identifying the set of two-dimensional reference image points comprises performing template matching on the image data. Applying template matching to locate image points based on known visual patterns ensures robust feature detection even under changing lighting or partial occlusions. By correlating image patches with predefined templates, the method enhances repeatability and minimizes reliance on manual feature selection.

According to an example, projecting the identified reference image points from two-dimensional image space into three-dimensional space comprises using intrinsic parameters of the camera and a geometric projection model. Incorporating the camera's intrinsic parameters and a calibrated projection model allows accurate mapping of image coordinates into real-world spatial coordinates. This translation facilitates aligning image-derived data with reference geometry and ensures fidelity in the resulting 3D reconstruction.

According to an example, aligning the first set of three-dimensional points with the second set of three-dimensional reference points comprises determining a transformation that includes a rotation matrix and optionally a translation vector, the transformation being selected to minimize a cost function representing the distances between corresponding points in the two sets. Computing a spatial transformation that minimizes the distance between measured and nominal points leads to an optimal alignment. When the distances are Euclidean, the approach benefits from both interpretability and numerical efficiency, enhancing the precision of the final pose estimate.

According to an example, template matching includes rotating and/or translating the template image region through a range of candidate orientations, and selecting the orientation that yields the highest similarity score with the image data. Allowing both rotational and translational search in template matching increases the robustness of feature detection in scenarios where the camera is not in its expected position. This adaptive matching increases reliability and extends the method's applicability to varied installation conditions.

According to an example, identifying the set of two-dimensional reference image points comprises performing edge detection on the image data to enhance structural features of the vehicle visible in the image; and locating features within the processed image data by template matching. Enhancing structural features via edge detection improves the clarity and salience of geometric contours before matching. Following this with template matching provides a focused and accurate means of locating the desired reference points within an enriched visual context.

According to an example, performing edge detection comprises dilating the detected edges to enhance visibility of features. Applying edge dilation makes detected features more pronounced, particularly where raw edge responses are weak or fragmented. This preprocessing step supports more stable and reliable feature localization in the presence of low contrast or visual noise.

According to an example, identifying the set of two-dimensional reference image points comprises applying a blur filter to the image data to reduce high-frequency noise. Image blurring suppresses pixel-level noise that could interfere with edge detection or matching, thereby improving the quality and robustness of the features extracted from the image.

According to an example, aligning the first set of three-dimensional points with the second set of three-dimensional reference points comprises executing an optimization algorithm. The optimization method may for example use the Broyden-Fletcher-Goldfarb-Shanno (BFGS) method to benefit from efficient convergence properties and high numerical stability. This results in precise computation of the alignment transformation with minimal computational overhead, making the method suitable for both embedded and offline calibration contexts.

According to a second aspect, there is provided a system for calibrating a camera mounted on a vehicle, the system comprising; at least one camera mounted on the vehicle; and computer system processing circuitry configured to: acquire image data from the camera, wherein the image data includes at least a portion of the vehicle; identify, within the image data, a set of two-dimensional reference image points corresponding to respective structural features of the vehicle; project the identified reference image points from two-dimensional image space into three-dimensional space, thereby obtaining a first set of three-dimensional points; obtain a second set of three-dimensional reference points corresponding to nominal positions of the features in a vehicle-fixed coordinate system; and align the first set of three-dimensional points with the second set of three-dimensional reference points to determine a rotational and/or positional deviation of the camera relative to the vehicle-fixed coordinate system.

Effects and features of this second aspect of the present disclosure are largely analogous to those described above in connection with the first aspect.

Further features of, and advantages with, the present disclosure will become apparent when studying the appended claims and the following description. The skilled person realize that different features of the present disclosure may be combined to create embodiments other than those described in the following, without departing from the scope of the present disclosure.

### BRIEF DESCRIPTION OF THE DRAWINGS

These and other aspects of the present disclosure will now be described in more detail, with reference to the appended drawings showing examples, wherein:
Fig. 1 is a flow chart illustrating a method for calibrating a camera mounted on a vehicle using image data that includes structural features of the vehicle.
Fig. 2 shows a vehicle equipped with a plurality of cameras mounted at predefined positions for capturing visual data used in calibration.
Fig. 3A shows a binary edge image derived from a sample image frame containing a portion of the vehicle.
Fig. 3B shows a portion of the binary edge map derived from the image of FIG. 3A, with reference image points identified by template matching in corresponding regions of interest.
Fig. 4 is a schematic diagram of a computer system for implementing examples disclosed herein.

### DETAILED DESCRIPTION

In the present detailed description, various embodiments of the method for calibrating a camera mounted on a vehicle are mainly discussed with reference to an image acquired by a front pinhole camera. It should be noted that this by no means limits the scope of the present method which is equally applicable to all types and position of cameras of a vehicle.

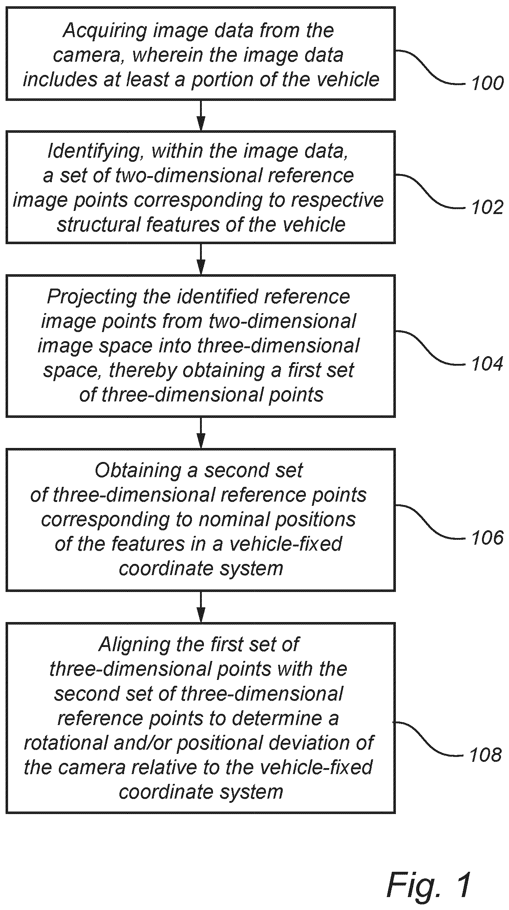

Reference is made to Figure 1, which illustrates a flow chart of a method for calibrating a camera mounted on a vehicle. The method is carried out by computer system processing circuitry and comprises a series of operations for determining a spatial deviation of the camera relative to a vehicle-fixed coordinate system. The operations illustrated in Fig. 1 include acquiring 100 image data, identifying 102 reference image points, projecting 104 the image points into three-dimensional space, obtaining 106 reference geometry, and aligning 108 observed and nominal data.

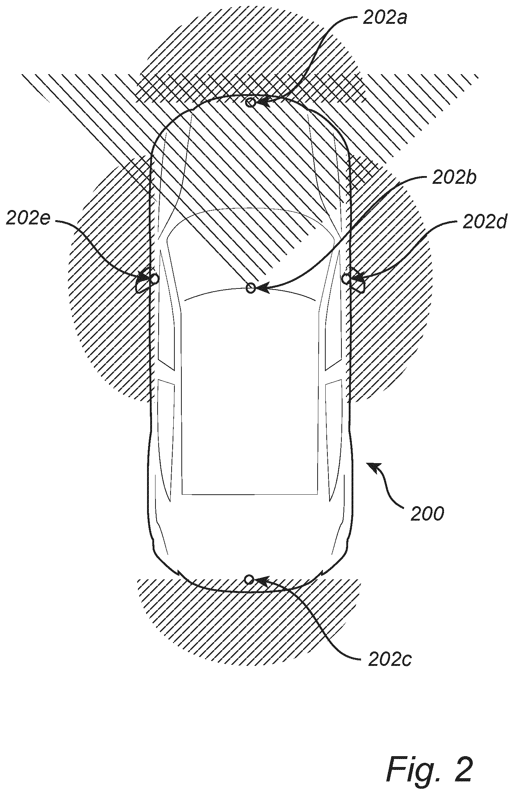

Fig. 2 shows a vehicle 200 equipped with a plurality of cameras 202a-e mounted at defined locations. The cameras may include a front fisheye camera 202a, a front pinhole camera 202b, a rear fisheye camera 202c, a right fisheye camera 202d, and a left fisheye camera 202e. The cameras 202a-e are mounted in fixed positions relative to the vehicle body and are used to capture visual data for various perception and control functions.

The method begins by acquiring 100 image data from one of the cameras 202a-e. The image data includes at least a portion of the vehicle 200 itself, meaning that structural features of the vehicle are visible in the field of view of the camera, and it is assumed that all cameras are arranged so that a portion of the vehicle is visible in an image captured by the respective camera. This visibility enables the use of the vehicle body as a spatial reference for determining the orientation of the cameras 202a-e.

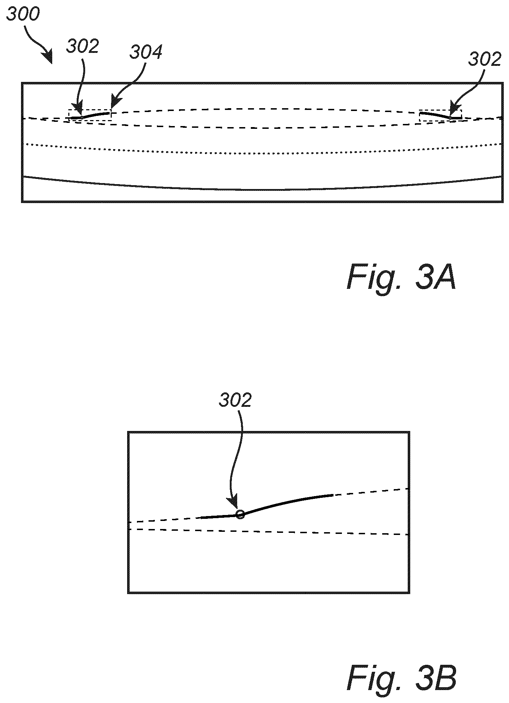

Fig. 3A illustrates a binary edge image 300 derived from a sample image frame containing a portion of the vehicle 200, taken by the front pinhole camera 202b. In particular, the image shows a profile of the hood of the vehicle. The edge image has been generated using Canny edge detection followed by morphological dilation to enhance structural contours. In the image, a number of two-dimensional reference image points 302 are indicated. These points correspond to predefined structural features of the vehicle, such as edge intersections, panel terminations, or geometrically salient contours. In the illustrated example, the reference image points 302 correspond to points where there is a change in slope of the hood profile. The selected features are chosen for their consistent visibility from the respective camera 202a-e and their predictability across vehicles of the same model. The reference image points 302 may in practice be predetermined, meaning that their nominal three-dimensional positions are known in advance from a geometric model of the vehicle.

Next, the computer system identifies 102 the reference image points 302 within the processed edge image 300. The identification process involves performing template matching within regions of interest centered around expected feature locations. Each template is derived from a projection of a known vehicle feature and may be subjected to rotational and translational shifts during the matching process to account for possible deviations in camera orientation. The position of each reference image point 302 is determined by the template orientation and placement yielding the highest similarity score, thereby enabling precise and repeatable localization of visual features.

Following identification, the method projects 104 the reference image points 302 from two-dimensional image space into three-dimensional space. This operation uses the intrinsic parameters of the respective camera 202a-e, including focal length, principal point coordinates, and distortion coefficients, together with a geometric projection model. The output of this operation is a first set of three-dimensional points representing the observed positions of the vehicle features as viewed from the current orientation of the camera.

The method proceeds by obtaining 106 a second set of three-dimensional reference points. These reference points represent the nominal positions of the same vehicle features in the coordinate system of the vehicle 200. The nominal reference points may be retrieved from a CAD model or similar geometric database. These nominal values serve as a baseline for determining any deviation in the camera's current spatial configuration.

In operation 108, the first set of observed three-dimensional points is aligned with the second set of nominal reference points. The alignment operation determines a transformation, such as a rotation matrix and optionally a translation vector, that minimizes a spatial cost function between corresponding points. This transformation expresses the rotational and/or positional deviation of the camera 202a-e from its expected position relative to the vehicle-fixed coordinate system.

According to one example, the set of two-dimensional reference image points 302 is defined based on a three-dimensional model of the vehicle, meaning that the features to be identified in the image data are known in advance. In the implemented method, this model may be a detailed CAD representation of the vehicle exterior. The corresponding three-dimensional coordinates of the reference points are determined by manually selecting features in the CAD model that are visible in the camera image and that correspond to distinctive structural elements of the vehicle. While no automatic projection into the image plane is performed, the CAD-derived points provide the necessary geometric reference for computing the spatial deviation of the camera once the corresponding image points have been identified.

The second set of three-dimensional reference points is obtained from nominal features of the vehicle. These nominal features are typically extracted directly from the CAD model of the vehicle, ensuring geometric consistency with the actual vehicle design. The nominal points are defined in a vehicle-fixed coordinate system and represent the ideal spatial positions of the same features identified in the image. Alternatively, the nominal features may be derived from high-resolution nominal images captured using calibrated cameras in controlled conditions, providing a photometric basis for comparison.

According to an example, the operation of obtaining a second set of three-dimensional reference points, for example from a CAD model of the vehicle, may comprise sending a request for a CAD model or a second set of three-dimensional reference points to a remote server and, in response thereto, receiving a data package comprising the CAD model or the requested second set of three-dimensional reference points. According to another example, the operation of obtaining a second set of three-dimensional reference points may comprise accessing a data repository of the vehicle where the CAD model and/or second set of three-dimensional reference points is stored.

Identification of the reference image points 302 within the image data 300 comprises performing template matching. The process involves selecting distinct visual features, typically intersections or corners of body elements, and defining small rectangular regions of interest 304

(ROIs) around them as illustrated in Fig. 3A. These templates are matched against the processed image using normalized cross-correlation or similar similarity metrics to find the location with the highest match score as illustrated in Fig. 3B. The matching can be implemented using known matching functions such as the "matchTemplate" function from OpenCV (Open Computer vision Library), and the best-matching position is identified by maximum correlation coefficient.

The template matching operation includes rotating and/or translating the template region across a search space in the image. During execution, the template is rotated through a range of angles to accommodate possible camera orientation deviations. This procedure improves robustness when the actual pose of the camera deviates from its nominal configuration. The match with the highest score across all rotations is selected as the detected feature location, allowing for accurate alignment even under roll, pitch, or yaw deviations.

Prior to template matching, the image data 300 may be preprocessed to enhance the visibility of structural features. According to one example, a Gaussian blur is applied to reduce high-frequency image noise. An example kernel size is 5×5 with a = 1.5, which smooths intensity variations while preserving structural contours. Following this, Canny edge detection can be applied to extract edges of high-intensity gradient. This method identifies regions with strong intensity changes and produces a binary image in which edges appear as white lines. Thresholds are chosen to preserve relevant vehicle edges while suppressing irrelevant background details. The resulting binary edge map may then be subjected to dilation using morphological operators, which thicken edge lines and improve the consistency of detected features across frames with slight pose variations.

The template is then matched to this processed binary mask. Optimal points for reference are selected based on structural uniqueness, typically corners, junctions, or intersections. These points are located using the best matching position of the template. Each optimal point is paired with a corresponding ROI that defines the template used for matching. This process ensures that the same visual pattern is reliably located across rotated images.

Once the pixel coordinates of the reference image points are identified, they are undistorted to remove effects introduced by lens geometry. The fisheye cameras 202a, 202c-e exhibit strong barrel distortion, while the pinhole camera 202b has moderate radial and tangential distortion. Using intrinsic camera parameters including distortion coefficients and the intrinsic matrix the identified points are corrected using an image undistortion function. Only the points are undistorted, not the entire image, which improves efficiency without sacrificing accuracy.

According to one example, the corrected two-dimensional image points are projected into three-dimensional space using a back-projection model. The projection follows the inverse pinhole camera model, incorporating focal length, principal point, and a depth scale factor. Given that the actual 3D location of each visible point on the vehicle is constrained by the known geometry, the algorithm solves for the 3D direction vector in the camera coordinate frame. The 3D distance to each point is assumed to remain constant under camera rotation, allowing estimation of the rotated 3D points using only orientation information.

To compute the spatial deviation of the camera, the method aligns the first set of 3D points (observed from the image) with the second set of nominal 3D reference points. The transformation determined includes a rotation matrix and optionally a translation vector. The alignment is formulated as an optimization problem, where a cost function is defined based on the sum of squared Euclidean distances between the corresponding points in the two sets. By minimizing this cost function, the system identifies the camera's deviation in orientation and position from its nominal mounting.

According to one example, the optimization problem is solved using the Broyden-Fletcher-Goldfarb-Shanno (BFGS) method. BFGS is a quasi-Newton optimization technique that approximates the inverse Hessian of the cost function and iteratively refines the parameter estimates. The method begins from an initial guess-typically zero deviation-and proceeds until convergence is achieved. This approach balances computational efficiency and precision, enabling sub-degree resolution in the recovered rotation angles for all three axes: roll, pitch, and yaw.

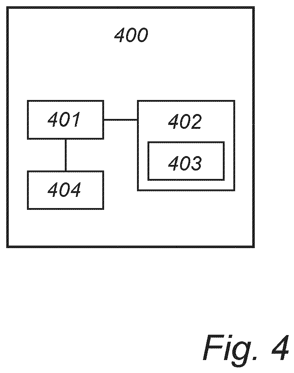

Fig. 4 illustrates a computer system 400 according to an embodiment. The steps of a method performed by the computer system 400 are in practice performed by processing circuitry 401, also referred to as computer system processing circuitry, embodied in the form of one or more microprocessors arranged to execute a computer program 402 downloaded to a non-transitory computer readable storage medium 403 associated with the microprocessor, such as a Random Access Memory (RAM), a Flash memory or a hard disk drive (HDD). The storage medium may also comprise one or more data repositories, for example storing sets of three-dimensional reference points and/or CAD models. The processing circuitry 401 is arranged to cause the computer system 400 to carry out the method according to embodiments when the appropriate computer program 402 comprising computer-executable instructions is downloaded to the storage medium 403 and executed by the processing circuitry 401. The storage medium 403 may also be a computer program product comprising the computer program 402. Alternatively, the computer program 402 may be transferred to the storage medium 403 by means of a suitable computer program product, such as a Digital Versatile Disc (DVD) or a memory stick. As a further alternative, the computer program 402 may be downloaded to the storage medium 403 over a network. The processing circuitry 401 may alternatively be embodied in the form of a Digital Signal Processor (DSP), an application specific integrated circuit (ASIC), a Field-Programmable Gate Array (FPGA), a Complex Programmable Logic Device (CPLD), etc. The computer system 400 further comprises a communication interface 404 (wired or wireless) over which it is configured to transmit and receive data.

According to an example, the computer system processing circuitry, or processing circuitry, is what generally is referred to as a core computer of a vehicle. The core computer may be implemented as a central processing circuitry or as a distributed network of interconnected logical or physical processing circuitries. As will be appreciated by a person skilled in the art, one or more operations of methods of the present disclosure may be, at least in part, performed in or by a remote server such as in a cloud or edge cloud architecture. If one, or more, at least in part, operations of methods of the present disclosure is performed in or by a remote server, the method may obviously comprise operations like, via a wireless communication network, sending data to the remote server, receiving data transmitted by the remote server, receiving a request from the remote server to send data, and/or send a request for data to the remote server. The data sent and/or received, and/or the requests for data sent and/or received, may be transmitted via one or more intermediate relay nodes of the wireless communication network. For example, a remote server may, at least in part, be involved in the operations of: obtaining 106 a second set of three-dimensional reference points, and/or operation 108, aligning the first set of observed three-dimensional points with the second set of nominal reference points.

Example 1. A computer implemented method for calibrating a camera (202a-e) mounted on a vehicle (200), the method comprising, by computer system processing circuitry: acquiring (100) image data (300) from the camera (202a-e), wherein the image data includes at least a portion of the vehicle; identifying (102), within the image data, a set of two-dimensional reference image points (302) corresponding to respective structural features of the vehicle; projecting (104) the identified reference image points from two-dimensional image space into three-dimensional space, thereby obtaining a first set of three-dimensional points; obtaining (106) a second set of three-dimensional reference points corresponding to nominal positions of the features in a vehicle-fixed coordinate system; and aligning (108) the first set of three-dimensional points with the second set of three-dimensional reference points to determine a rotational and/or positional deviation of the camera relative to the vehicle-fixed coordinate system.

Example 2. The method according to example 1, wherein the set of two-dimensional reference image points is defined based on a three-dimensional model of the vehicle.

Example 3. The method according to example 1 or 2, wherein the second set of three-dimensional reference points is obtained from nominal features of the vehicle.

Example 4. The method according to any one of the preceding examples, where identifying the set of two-dimensional reference image points comprises performing template matching on the image data.

Example 5. The method according to any one of the preceding examples, wherein projecting the identified reference image points from two-dimensional image space into three-dimensional space comprises using intrinsic parameters of the camera and a geometric projection model.

Example 6. The method according to any one of the preceding examples, wherein aligning the first set of three-dimensional points with the second set of three-dimensional reference points comprises determining a transformation that includes a rotation matrix and optionally a translation vector, the transformation being selected to minimize a cost function representing the distances between corresponding points in the two sets.

Example 7. The method according to any one of the preceding examples, wherein template matching includes rotating and/or translating the template image region through a range of candidate orientations, and selecting the orientation that yields the highest similarity score with the image data.

Example 8. The method according to any one of the preceding examples, wherein identifying the set of two-dimensional reference image points comprises: performing edge detection on the image data to enhance structural features of the vehicle visible in the image; and locating features within the processed image data by template matching.

Example 9. The method according to example 8, wherein performing edge detection comprises dilating the detected edges to enhance visibility of features.

Example 10. The method according to any one of the preceding examples, wherein identifying the set of two-dimensional reference image points comprises applying a blur filter to the image data to reduce high-frequency noise.

Example 11. The method according to any one of the preceding examples, wherein aligning the first set of three-dimensional points with the second set of three-dimensional reference points comprises executing an optimization algorithm.

Example 12. The method according to any one of the preceding examples, wherein the operation of obtaining (106) a second set of three-dimensional reference points comprises accessing a remote server comprising the second set of three-dimensional reference points and/or a CAD model comprising the second set of three-dimensional reference points.

Example 13. The method according to any one of examples 2 to 13, wherein the operation of obtaining (106) a second set of three-dimensional reference points comprises requesting (for example by wirelessly sending a request) from a remote server the second set of three-dimensional reference points and/or a CAD model comprising the second set of three-dimensional reference points, and, in response thereto, receiving a data package comprising the second set of three-dimensional reference points and/or a CAD model comprising the second set of three-dimensional reference points.

Example 14. The method according to any one of the preceding examples, wherein the method is performed by a computer system processing circuitry (401).

Example 15. The method according to example 14, wherein the computer system processing circuitry (401) is a core computer of a vehicle.

Example 16. A computer program product comprising program code for performing, when executed by the processing circuitry, the method of any of examples 1 to 15.

Example 17. A non-transitory computer-readable storage medium comprising instructions, which when executed by the processing circuitry, cause the processing circuitry to perform the method of any of examples 1 to 15.

Example 18. A system for calibrating a camera mounted on a vehicle, the system comprising at least one camera (202a-e) mounted on the vehicle (200), and computer system processing circuitry (401) configured to: acquire image data (300) from the camera, wherein the image data includes at least a portion of the vehicle; identify, within the image data, a set of two-dimensional reference image points (302) corresponding to respective structural features of the vehicle; project the identified reference image points from two-dimensional image space into three-dimensional space, thereby obtaining a first set of three-dimensional points; obtain a second set of three-dimensional reference points corresponding to nominal positions of the features in a vehicle-fixed coordinate system; and align the first set of three-dimensional points with the second set of three-dimensional reference points to determine a rotational and/or positional deviation of the camera relative to the vehicle-fixed coordinate system.

Example 19. The system according to example 18, wherein the camera is selected from the group comprising: a front fisheye camera (202a); a front pinhole camera (202b); a rear fisheye camera (202c); a right fisheye camera (202d); and a left fisheye camera (202e). Various examples have been described.

These and other examples are within the scope of the following claims.

## Claims

1. A computer implemented method for calibrating a camera (202a-e) mounted on a vehicle (200), the method comprising, by computer system processing circuitry:
acquiring (100) image data (300) from the camera (202a-e), wherein the image data includes at least a portion of the vehicle;
identifying (102), within the image data, a set of two-dimensional reference image points (302) corresponding to respective structural features of the vehicle;
projecting (104) the identified reference image points from two-dimensional image space into three-dimensional space, thereby obtaining a first set of three-dimensional points;
obtaining (106) a second set of three-dimensional reference points corresponding to nominal positions of the features in a vehicle-fixed coordinate system; and
aligning (108) the first set of three-dimensional points with the second set of three-dimensional reference points to determine a rotational and/or positional deviation of the camera relative to the vehicle-fixed coordinate system.

2. The method according to claim 1, wherein the set of two-dimensional reference image points is defined based on a three-dimensional model of the vehicle.

3. The method according to claim 1 or 2, wherein the second set of three-dimensional reference points is obtained from nominal features of the vehicle.

4. The method according to any one of the preceding claims, where identifying the set of two-dimensional reference image points comprises performing template matching on the image data.

5. The method according to any one of the preceding claims, wherein projecting the identified reference image points from two-dimensional image space into three-dimensional space comprises using intrinsic parameters of the camera and a geometric projection model.

6. The method according to any one of the preceding claims, wherein aligning the first set of three-dimensional points with the second set of three-dimensional reference points comprises determining a transformation that includes a rotation matrix and optionally a translation vector, the transformation being selected to minimize a cost function representing the distances between corresponding points in the two sets.

7. The method according to any one of the preceding claims, wherein template matching includes rotating and/or translating the template image region through a range of candidate orientations, and selecting the orientation that yields the highest similarity score with the image data.

8. The method according to any one of the preceding claims, wherein identifying the set of two-dimensional reference image points comprises:
performing edge detection on the image data to enhance structural features of the vehicle visible in the image; and
locating features within the processed image data by template matching.

9. The method according to claim 8, wherein performing edge detection comprises dilating the detected edges to enhance visibility of features.

10. The method according to any one of the preceding claims, wherein identifying the set of two-dimensional reference image points comprises applying a blur filter to the image data to reduce high-frequency noise.

11. The method according to any one of the preceding claims, wherein aligning the first set of three-dimensional points with the second set of three-dimensional reference points comprises executing an optimization algorithm.

12. A computer program product comprising program code for performing, when executed by the processing circuitry, the method of any of claims 1 to 11.

13. A non-transitory computer-readable storage medium comprising instructions, which when executed by the processing circuitry, cause the processing circuitry to perform the method of any of claims 1 to 11.

14. A system for calibrating a camera mounted on a vehicle, the system comprising at least one camera (202a-e) mounted on the vehicle (200), and computer system processing circuitry (401) configured to:
acquire image data (300) from the camera, wherein the image data includes at least a portion of the vehicle;
identify, within the image data, a set of two-dimensional reference image points (302) corresponding to respective structural features of the vehicle;
project the identified reference image points from two-dimensional image space into three-dimensional space, thereby obtaining a first set of three-dimensional points;
obtain a second set of three-dimensional reference points corresponding to nominal positions of the features in a vehicle-fixed coordinate system; and
align the first set of three-dimensional points with the second set of three-dimensional reference points to determine a rotational and/or positional deviation of the camera relative to the vehicle-fixed coordinate system.

15. The system according to claim 14, wherein the camera is selected from the group comprising:
a front fisheye camera (202a);
a front pinhole camera (202b);
a rear fisheye camera (202c);
a right fisheye camera (202d); and
a left fisheye camera (202e).
